Europäisches Patentamt

European Patent Office

Office européen des brevets

(19)

(11) **EP 0 407 171 B1**

(12) **EUROPEAN PATENT SPECIFICATION**

(45) Date of publication and mention
of the grant of the patent:
**15.05.1996 Bulletin 1996/20**

(51) Int Cl.⁶: **G11B 7/085**

(21) Application number: **90307311.2**

(22) Date of filing: **04.07.1990**

(54) **Detector for moving velocity of light beam spot**

Detektionsschaltung zur Feststellung der Spursuchgeschwindigkeit eines Lichtpunkts

Détecteur pour la détermination de la vélocité d'accès aux pistes d'un faisceau de lumière

(84) Designated Contracting States:
**DE FR GB IT NL**

(30) Priority: **04.07.1989 JP 171101/89**
**27.06.1990 JP 166855/90**

(43) Date of publication of application:
**09.01.1991 Bulletin 1991/02**

(73) Proprietor: **CANON KABUSHIKI KAISHA**
**Tokyo (JP)**

(72) Inventor: **Tamaki, Kenji**
**Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 301 791          US-A- 4 104 573**
**US-A- 4 627 038          US-A- 4 740 939**

• **PATENT ABSTRACTS OF JAPAN vol. 12, no. 451**
**(P-791)(3298) 28 November 1988 & JP-A- 63 173**
**230**

## Description

BACKGROUND OF THE INVENTION

Field of the Invention

The present invention relates to an optical information recording/reproducing apparatus for recording and/or reproducing information on and/or from an optical disk having a plurality of tracks by using a light beam spot, and more particularly to a velocity detector in such an apparatus for detecting a moving velocity of the light beam spot during a seek operation to direct the light beam spot to a desired track on the optical disk.

Related Background Art

As the recent advancement of laser technology, the development of a high capacity, high density random access optical disk has been attracting attention. In such an optical disk, a finely focused light beam spot is directed to a desired track on a recording medium (disk) and moved along the desired track to record and/or reproduce information.

Various accessing methods have been deviced. Among others, a cross-track method in which a target track is sought by counting the number of tracks which the light beam spot crosses when it accesses to the target track has been attracting attention because of its high seeking precision.

In such a cross-tracking system, the target track is sought by counting the number of tracks crossed and a signal which relates to a difference between a command velocity and a real velocity of the light beam spot on the disk is supplied to light beam spot moving means such as a linear motor based on the number of tracks crossed in order to control the velocity of the light beam spot.

The command velocity is generated in accordance with a velocity profile generated by a CPU in accordance with a seek distance prior to seeking, and the real velocity may be measured by one of various methods.

An example of real velocity measurement method is disclosed in Japanese Laid-Open Patent Application No. 63-173230. This method is described below.

In this method, a velocity detection method called a period measurement type is used when the moving velocity of the light beam spot is high, and a velocity detection method called a differentiation type is used for a low velocity.

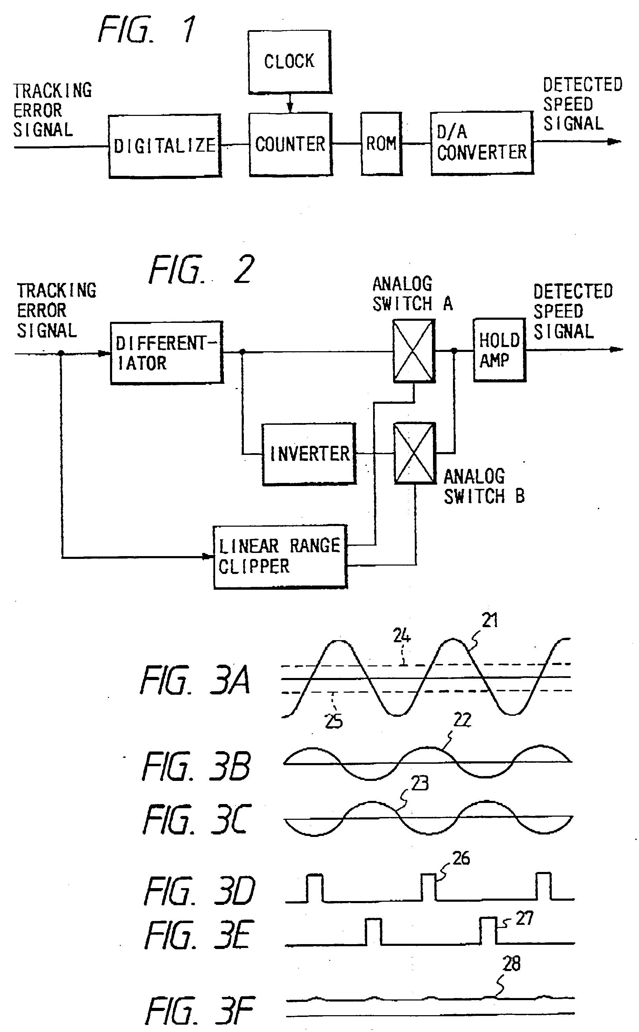

The period measurement type velocity detection method is first explained. Fig. 1 shows a block diagram of the period measurement type velocity detector.

In Fig. 1, when the light beam spot moves across a track, a tracking error signal is in a form of sine wave. The sine wave signal is digitized and one-period interval of the pulse signal is measured based on a reference clock. A reciprocal of the measured value is determined from a ROM table to produce a velocity signal.

The differentiation type velocity detection method is now explained. Figs. 2 and 3 show a block diagram of the differentiation type velocity detector and signal waveforms at various points of the block diagram.

In Figs. 2 and 3, a sine wave tracking error signal 21 generated when the light beam spot crosses the track is converted to differentiated waveforms 22 and 23 by a differentiator and an inverter. On the other hand, a linear range clipper produces timing signals 26 and 27 based on threshold levels 24 and 25 corresponding to a linear range of the tracking error signal and supplies them to switches A and B. The switches A and B close when the timing signal is of high level, and open when the timing signal is of low level. Thus, the switch A transmits only positive peak portions of the differentiated waveform 22 to a succeeding stage by the timing signal 26, and the switch B transmits only positive peak portions of the differentiated waveform 23 to the succeeding stage by the timing signal 27. As a result, a signal 28 which is close to a D.C. signal is produced at an output of a hold amplifier if the frequency of the tracking error signal is constant. Since the output 28 is produced by the differentiation, it is of a high level when the frequency of the tracking error signal is high, and of a low level when the frequency of the tracking error signal is low. That is, the output 28 represents the moving velocity of the light beam spot on the disk.

A reason for using different detection methods for the high moving velocity and the low moving velocity is explained below. The period measurement type velocity detection method generates a significant phase lag in the low velocity detection and it is not suitable to the low velocity detection. However, because of its wide dynamic range, it is effective in other velocity range including a high speed range. The differentiation type velocity detection method generates a small phase lag but it is difficult to attain the velocity detection of a wide dynamic range.

By using the both methods in a manner to complement the defects of the respective methods, the velocity detection over the entire velocity is well attained.

However, the above velocity detection method involves the following problems.

In the velocity detection in the low velocity range, only the positive peak areas of the differentiated signal and the inverted signal thereof which correspond to the linear range of the tracking error signal are sampled, and the sampled value is held during the sample-to-sample interval to produce a continuous velocity signal. However, if the velocity changes by any external disturbance during the sample hold period, a correct velocity detection for that velocity change cannot be attained. Further, in the vicinity of the target track, the velocity is low and the period of the differentiated waveform of the tracking error signal is long. As a result, if the target track is reached during the peak hold period or an external disturbance such as vibration is applied, the track pull-in may be done without detecting a correct velocity. This results in inaccurate velocity control of the light beam spot and impedes accurate access to the target track.

U.S. Patent No. 4,627,038 discloses an optical disc storage unit having three separate steps for detecting the velocity of a light beam spot.

It is a concern of the present invention to provide a light beam spot moving velocity detector which can accurately detect a velocity in a low velocity range in a seek operation of a light beam spot.

In accordance with a first aspect of the invention there is provided apparatus for detecting the velocity of a light beam spot as set out in claim 1.

In accordance with a second aspect of the invention there is provided a method of detecting the velocity of a light beam spot as set out in claim 2.

In order that the present invention may be more readily understood reference will now be made to the accompanying drawings in which:

Fig. 1 shows a block diagram of a prior art light beam spot moving velocity detector for a high velocity range,

Fig. 2 shows a block diagram of a prior art light beam spot moving velocity detector for a low velocity range,

Figs. 3A to 3F show signal waveforms at various points in the block diagram of Fig. 2,

Fig. 4 shows a block diagram of a first embodiment of a velocity detector of the present invention,

Figs. 5A to 5D show signal waveforms at various points in the block diagram of Fig. 4,

Fig. 6 shows a signal waveform of a tracking error signal,

Fig. 7 shows a block diagram of a second embodiment of the present invention which uses the velocity detector of the present invention shown in Fig. 4 as a velocity detector in a low velocity range, and

Fig. 8 shows a detailed block diagram of the velocity detector shown in Fig. 7 in a high velocity range.

DESCRIPTION OF THE PREFERRED
EMBODIMENTS

A principle of the velocity detection method of the present invention is first explained.

A sine wave tracking error signal (ATE) which is generated when a light beam spot crosses a track in an access mode is represented by

$$ATE = TE\sin\left(\frac{2\pi}{P_T}x\right) \qquad (1)$$

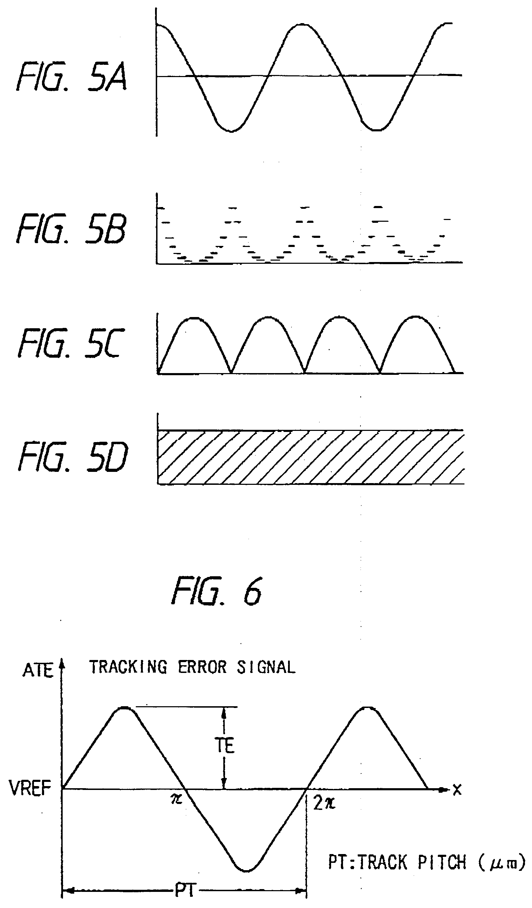

where TE is an amplitude and $P_T$ is a track pitch (see Fig. 6).

In order to obtain velocity information based on the tracking error signal, the tracking error signal is first differentiated by time t,

$$ATE' = TE\left(\frac{2\pi}{P_T}\right)\cos\left(\frac{2\pi}{P_T}x\right)\frac{dx}{dt} \qquad (2)$$

The above formula is rewritten to

$$\frac{dx}{dt} = ATE'\left(TE\left(\frac{2\pi}{P_T}\right)\cos\left(\frac{2\pi}{P_T}x\right)\right)^{-1} \qquad (3)$$

The tracking error signal ATE is normalized to get

$$\frac{ATE}{TE} = \sin\left(\frac{2\pi}{P_T}x\right) \qquad (4)$$

Since

$$\cos\omega t = \sqrt{1 - \sin^2\omega t} \qquad (5)$$

the formula (4) is rewritten to

$$\cos\left(\frac{2\pi}{P_T}x\right) = \sqrt{1 - \left(\frac{ATE}{TE}\right)^2} \qquad (6)$$

By placing the formula (6) in the formula (3), the velocity information $\frac{dx}{dt}$ is expressed by

$$\frac{dx}{dt} = ATE'\left(TE\left(\frac{2\pi}{P_T}\right)\sqrt{1 - \left(\frac{ATE}{TE}\right)^2}\right)^{-1} \qquad (7)$$

In the formula (7),

$$ROM\ data = \left(TE\left(\frac{2\pi}{P_T}\right)\sqrt{1 - \left(\frac{ATE}{TE}\right)^2}\right)^{-1}$$

$$(8)$$

which has previously calculated based on the normalized signal

$$\frac{ATE}{TE}\left(= \sin\left(\frac{2\pi}{P_T}x\right)\right)$$

of the tracking error signal is stored in a ROM which is a memory unit.

Thus, the ROM data is read in accordance with the normalized signal $\frac{ATE}{TE}$ of the tracking error signal, and it is multiplied with the differentiated signal ATE' of the tracking error signal given by the formula (7) to produce the velocity information $\frac{dx}{dt}$.

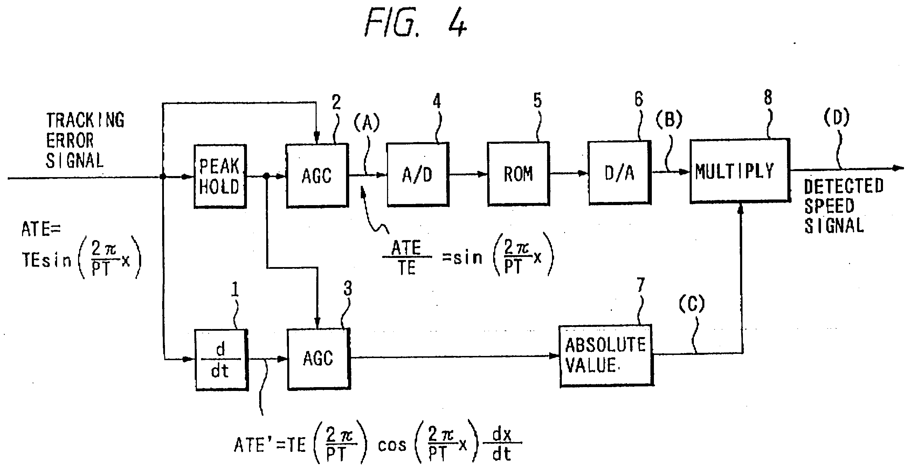

Fig 4 shows a circuit block diagram of one embodiment of the present invention which implements the above calculation method.

In Fig. 4, when the tracking error signal (formula (1)) detected by the detection means (not shown) is applied, it is normalized by an AGC amplifier 2 which produces a normalized signal (formula (4)). The normalized signal is digitized by an A/D converter 4 and a prestored operation value is read from a ROM 5 as the ROM data (formula (8)). It is further converted to an analog signal by a D/A converter and it is supplied to a multiplier 8.

On the other hand, the tracking error signal (formula (1)) is differentiated by a differentiator 1 to produce the differentiated signal (formula (2)). It is further normalized by an AGC amplifier 3 so that it is not affected by an amplitude variation when the light beam crosses the track at a high velocity. It is then absoluted by an absolute value circuit 7 and it is multiplied with the analog signal of the ROM data (formula (8)) by the multiplier 8, which produces the velocity information (formula (7)).

Figs. 5A - 5D show waveforms at various points in Fig. 4. Fig. 5A shows the normalized signal of the tracking error signal and it is the output waveform of the AGC amplifier 2 of Fig. 4. Fig. 5B shows the output waveform of the D/A converter 6 and Fig. 5C shows the output waveform of the absolute value circuit 7. The signals of Figs. 5B and 5C are multiplied to produce the velocity information shown in Fig. 5D at the output of the multiplier 8.

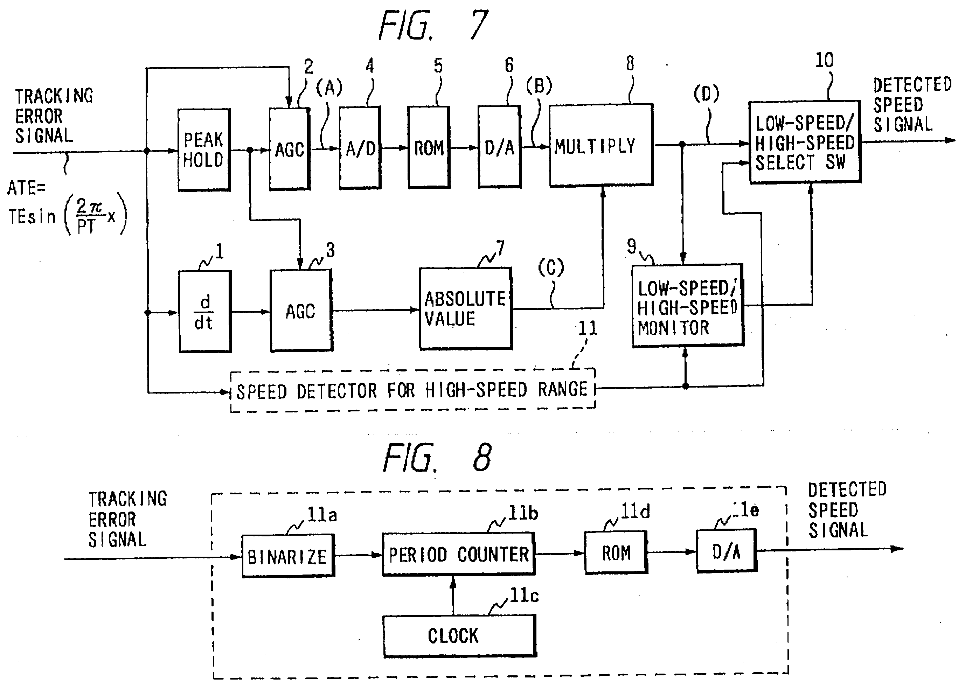

A second embodiment of the present invention is now explained with reference to Fig. 7. In the present embodiment, period measurement type velocity detection means is combined with the configuration of the first embodiment. The velocity detection method of the present invention shown in the first embodiment is used in the low velocity range, and the prior art period measurement type velocity detection method is used for the high velocity range so that the velocity detection is well attained over the entire velocity range.

In Fig. 7, the like numerals to those of the previous drawings denote the like elements.

In the second embodiment, there are two loops for detecting the velocities in the low velocity range and the high velocity range. Those are switched by a switch 10 at a switching timing determined by a low velocity/high velocity monitor 9.

For example, in the switching from the low velocity system to the high velocity system, the output of the multiplier 8 is detected by the low velocity/high velocity monitor 9, and when it reaches a predetermined level (a limit of a band of the low velocity circuit), the low velocity/high velocity monitor 9 sends a switching timing pulse to the low velocity/high velocity switch 10. Conversely, in the switching from the high velocity system to the low velocity system, an output of a high velocity range velocity detector 11 is detected by the low velocity/high velocity monitor 9 and when it reaches the predetermined level, the low velocity/high velocity monitor 9 sends the switching timing pulse to the low velocity/high velocity switch 10. In this manner, the velocity detection is well attained over the entire velocity range from the beginning of movement to the maximum velocity when the track is sought at a maximum radial acceleration of the disk.

Fig. 8 shows the high velocity range velocity detector 11 of Fig. 7. The tracking error signal is binarized by a binarizing circuit 11a and a half-period interval of the binary signal is counted by a period counter 11b. A reciprocal of the count is read from a ROM 11d so that data which is proportional to the frequencyor velocity is produced. The data is then converted to an analog signal by a D/A converter 11e to produce the velocity signal for the high velocity range.

## Claims

1. Apparatus for detecting the velocity of a light beam spot when it moves to seek a target track, comprising:

   differentiation means (1) for differentiating a tracking error signal which is generated when a target track is sought and which indicates the relative position between a track and the light beam spot; and characterised in that the apparatus comprises:
   means (2) for normalising the tracking error signal;
   memory means (5) for storing a plurality of values which correspond to

   $$(TE\,(2\pi/P_T)\,\sqrt{1\text{-}(ATE/TE)^2})^{-1},$$

   (wherein ATE is a tracking error signal, TE is an amplitude of ATE, and $P_T$ is track pitch), and which depend on the normalised tracking error signal; and
   means (8) for producing a signal which indicates the velocity of the light beam spot and which corresponds to a multiplied value of an output from the memory means which has been determined by the normalised tracking error signal (ATE/AT) and a signal corresponding to the output (ATE') of the differentiation means.

2. A method of detecting the velocity of a light beam spot when it moves to seek a target track, comprising:

   generating a tracking error signal which indicates the relative position between a track and the light beam spot;
   differentiating (1) the tracking error signal;
   normalising the tracking error signal;
   utilising the normalised tracking error signal to obtain an output from a memory means (5) which stores data representing a plurality of constant values which depend on the relative positions between a track and the light beam spot, the memory means storing a plurality of values which correspond to

   $$(TE\,(2\pi/P_T)\,\sqrt{1\text{-}(ATE/TE)^2})^{-1},$$

   (wherein ATE is a tracking error signal, TE is an amplitude of ATE, and $P_T$ is track pitch), and which depend on the normalised tracking error signal; and
   producing (8) a signal which indicates the velocity of the light beam spot and which corresponds to a multiplied value of an output from the memory means which has been determined by the value of the normalised tracking error signal (ATE/AT) and a signal corresponding to the output (ATE') of the differentiation means.

## Patentansprüche

1. Vorrichtung zum Erfassen der Geschwindigkeit eines sich beim Suchen einer Zielspur bewegenden Lichtpunktes, mit:

einer Differentiationseinrichtung (1) zum Differenzieren eines beim Suchen einer Zielspur erzeugten und die relative Position zwischen einer Spur und dem Lichtpunkt wiedergebenden Spurführungsfehlersignals, und **gekennzeichnet durch**
eine Einrichtung (2) zum Normieren des Spurführungsfehlersignals;
eine Speichereinrichtung (5) zum Speichern einer Vielzahl von

$$(TE\, (2\pi/P_T)\, \sqrt{1-(ATE/TE)^2})^{-1}$$

entsprechenden Werten (wobei ATE ein Spurführungsfehlersignal, TE eine Amplitude von ATE und $P_T$ ein Spurabstand ist), und wobei die Werte von dem normierten Spurführungsfehlersignal abhängen; und
eine Einrichtung (8) zum Erzeugen eines Signals, das die Lichtpunktgeschwindigkeit anzeigt und das einem Multiplikationswert aus einem durch das normierte Spurführungsfehlersignal (ATE/TE) bestimmten Ausgangssignal der Speichereinrichtung und einem dem Ausgangssignal (ATE') der Differentiationseinrichtung entsprechenden Signal entspricht.

2. Verfahren zum Erfassen der Geschwindigkeit eines sich beim Suchen einer Zielspur bewegenden Lichtpunktes, mit:

Erzeugen eines die relative Position zwischen einer Spur und dem Lichtpunkt anzeigenden Spurführungsfehlersignals;
Differenzieren (1) des Spurführungsfehlersignals;
Normieren des Spurführungsfehlersignals;
Verwenden des normierten Spurführungsfehlersignals zum Erhalten eines Ausgangssignals aus einer Speichereinrichtung (5), die Daten speichert, die eine Vielzahl von konstanten Werten wiedergeben, welche von den relativen Positionen zwischen einer Spur und dem Lichtpunkt abhängig sind, wobei die Speichereinrichtung eine Vielzahl von

$$(TE\, (2\pi/P_T)\, \sqrt{1-(ATE/TE)^2})^{-1}$$

entsprechenden Werten speichert (wobei ATE ein Spurführungsfehlersignal, TE eine Amplitude von ATE und $P_T$ ein Spurabstand ist), und wobei die Werte von dem normierten Spurführungsfehlersignal abhängig sind; und
Erzeugen (8) eines Signals, das die Lichtpunktgeschwindigkeit anzeigt und einem Multiplikationswert aus einem durch den Wert des normierten Spurführungsfehlersignal (ATE/TE) bestimmten Ausgangssignal der Speichereinrichtung und einem dem Ausgangssignal (ATE') der Differentiationseinrichtung entsprechenden Signal entspricht.

## Revendications

1. Appareil pour détecter la vitesse de la trace d'un faisceau lumineux lorsqu'elle se déplace pour rechercher une piste cible, comprenant :

un moyen (1) de différentiation pour différentier un signal d'erreur de poursuite qui est généré lorsqu'une piste cible est recherchée et qui indique la position relative entre une piste et la trace du faisceau lumineux ; et caractérisé en ce que l'appareil comprend :
un moyen (2) pour normaliser le signal d'erreur de poursuite ;
un moyen (5) à mémoire pour stocker un ensemble de valeurs qui correspondent à

$$(TE(2\pi\,/\,P_T)\sqrt{1-(ATE\,/\,TE)^2})^{-1}$$

(où ATE est le signal d'erreur de poursuite, TE est l'amplitude de ATE, et $P_T$ est le pas entre pistes), et qui dépendent du signal d'erreur de poursuite normalisé ; et
un moyen (8) pour produire un signal qui indique la vitesse de la trace du faisceau lumineux et qui correspond à une valeur multipliée d'une sortie du moyen à mémoire, qui a été déterminée à partir du signal d'erreur de poursuite normalisé (ATE/AT) et d'un signal correspondant à la sortie (ATE') du moyen de différentiation.

2. Procédé de détection de la vitesse de la trace d'un faisceau lumineux lorsqu'elle se déplace pour rechercher une piste cible, comprenant :

la production d'un signal d'erreur de poursuite qui indique la position relative entre une piste et la trace du faisceau lumineux ;
la différentiation (1) du signal d'erreur de poursuite ;
la normalisation du signal d'erreur de poursuite ;
l'utilisation du signal d'erreur de poursuite normalisé pour obtenir une sortie d'un moyen (5) à mémoire qui stocke des données représentant un ensemble de valeurs constantes qui dépendent des positions relatives entre une piste et la trace du faisceau lumineux, le moyen à mémoire stockant un ensemble de valeurs qui correspondent à

$$(TE(2\pi\,/\,P_T)\sqrt{1-(ATE\,/\,TE)^2})^{-1}$$

(où ATE est le signal d'erreur de poursuite, TE est l'amplitude de ATE, et $P_T$ est le pas entre pistes), et qui dépendent du signal d'erreur de poursuite normalisé ; et

de production (8) d'un signal qui indique la vitesse de la trace du faisceau lumineux et qui correspond à une valeur multipliée d'une sortie du moyen à mémoire, qui a été déterminée à partir du signal d'erreur de poursuite normalisé (ATE/AT) et d'un signal correspondant à la sortie (ATE') du moyen de différentiation.

EP 0 407 171 B1

*FIG. 1*

*FIG. 2*

*FIG. 3A*

*FIG. 3B*

*FIG. 3C*

*FIG. 3D*

*FIG. 3E*

*FIG. 3F*

7

# FIG. 4

$$ATE = TEsin\left(\frac{2\pi}{PT}x\right)$$

$$\frac{ATE}{TE} = sin\left(\frac{2\pi}{PT}x\right)$$

$$ATE' = TE\left(\frac{2\pi}{PT}\right)cos\left(\frac{2\pi}{PT}x\right)\frac{dx}{dt}$$

FIG. 5A

FIG. 5B

FIG. 5C

FIG. 5D

FIG. 6

TRACKING ERROR SIGNAL

ATE

VREF

TE

π

2π

X

PT

PT:TRACK PITCH (μm)

FIG. 7

$$ATE = TE\sin\left(\frac{2\pi}{PT}x\right)$$

TRACKING ERROR SIGNAL → PEAK HOLD → AGC 2 (A) → A/D 4 → ROM 5 → D/A 6 (B) → MULTIPLY 8 (D) → LOW-SPEED/HIGH-SPEED SELECT SW 10 → DETECTED SPEED SIGNAL

$\frac{d}{dt}$ 1 → AGC 3 → ABSOLUTE VALUE 7 (C)

SPEED DETECTOR FOR HIGH-SPEED RANGE 11

LOW-SPEED/HIGH-SPEED MONITOR 9

FIG. 8

TRACKING ERROR SIGNAL → BINARIZE 11a → PERIOD COUNTER 11b → ROM 11d → D/A 11e → DETECTED SPEED SIGNAL

CLOCK 11c